(19) Europäisches Patentamt / European Patent Office / Office européen des brevets

(11) **EP 3 861 713 B1**

(12) **FASCICULE DE BREVET EUROPEEN**

(45) Date de publication et mention de la délivrance du brevet:
**01.11.2023 Bulletin 2023/44**

(21) Numéro de dépôt: **19797775.4**

(22) Date de dépôt: **30.09.2019**

(51) Classification Internationale des Brevets (IPC):
***H04N 23/68*** *(2023.01)*

(52) Classification Coopérative des Brevets (CPC):
**H04N 23/683; H04N 23/6812**

(86) Numéro de dépôt international:
**PCT/FR2019/052305**

(87) Numéro de publication internationale:
**WO 2020/070424 (09.04.2020 Gazette 2020/15)**

(54) **PROCEDE POUR AFFICHER UNE IMAGE INDEPENDAMMENT DE L'ORIENTATION DU MOYEN DE CAPTURE OU D'UNE INTERFACE HOMME-MACHINE DE SORTIE D'UN DISPOSITIF ELECTRONIQUE METTANT EN OEUVRE LEDIT PROCEDE**

VERFAHREN ZUR ANZEIGE EINES BILDES UNABHÄNGIG VON DER ORIENTIERUNG DER AUFNAHMEEINRICHTUNG ODER EINER MENSCH-MASCHINE-AUSGANGSSCHNITTSTELLE EINER ELEKTRONISCHEN VORRICHTUNG ZUR DURCHFÜHRUNG DIESES VERFAHRENS

METHOD FOR DISPLAYING AN IMAGE INDEPENDENTLY OF THE ORIENTATION OF THE CAPTURING MEANS OR OF A HUMAN-MACHINE OUTPUT INTERFACE OF AN ELECTRONIC DEVICE CARRYING OUT SAID METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.10.2018 US 201862740150 P**

(43) Date de publication de la demande:
**11.08.2021 Bulletin 2021/32**

(73) Titulaire: **Crosscall**
**13290 Aix en Provence (FR)**

(72) Inventeurs:
• **BEAUCOURT, Benoît**
**13013 MARSEILLE (FR)**
• **GORRE, Frédéric**
**13006 MARSEILLE (FR)**
• **CZAICKI, Bertrand**
**13290 AIX EN PROVENCE (FR)**

(74) Mandataire: **Med'inVent Consulting**
**Espace Mistral Bâtiment A**
**297, avenue du Mistral**
**13705 La Ciotat Cedex (FR)**

(56) Documents cités:
EP-A1- 3 123 732 WO-A1-2014/031830
US-A1- 2011 228 112 US-A1- 2014 118 256

**Description**

L'invention concerne le domaine des dispositifs électroniques agencés pour délivrer ou sortir, via une interface homme-machine adaptée telle qu'un écran par exemple, une image ou flux vidéo préalablement capturé à l'aide d'un moyen de capture tel qu'une caméra, afin qu'un utilisateur puisse visualiser ladite image ou ledit flux vidéo.

Plus précisément, l'invention concerne avantageusement, mais de manière non limitative, un procédé mis en oeuvre par un téléphone mobile intelligent, connu sous l'appellation anglo-saxonne « smartphone », ou bien une tablette tactile.

Un tel dispositif électronique comporte une unité de traitement comprenant un ou plusieurs microprocesseurs ou microcontrôleurs coopérant, via un ou plusieurs bus électroniques, avec une mémoire de données et une mémoire de programmes. Généralement, un tel dispositif électronique comporte une interface de sortie, sous la forme d'un écran, pour qu'un utilisateur puisse visualiser un contenu multimédia, par exemple un menu, une photographie ou une vidéo, ledit contenu multimédia étant préalablement inscrit dans la mémoire de données.

Un utilisateur d'un tel dispositif électronique peut interagir avec ce dernier via une interface homme-machine d'entrée sous la forme non limitative d'un clavier ou d'un dispositif de pointage, par exemple une souris d'ordinateur ou un stylet. De nos jours, de nombreux dispositifs électroniques de ce type comportent une interface homme-machine d'entrée et une interface homme-machine de sortie constituant une seule et même entité physique, par exemple, sous la forme d'un écran tactile.

Lorsqu'un tel dispositif électronique consiste en un téléphone mobile, une tablette, voire un ordinateur portable, ledit dispositif électronique comporte un ou plusieurs moyens de capture d'une scène sous la forme d'une caméra ou d'un appareil photographique pour capturer ladite scène et en produire une reproduction numérique, généralement sous la forme d'une matrice de pixels, ou d'un flux, généralement nommés « frames » selon une terminologie anglo-saxonne.

Communément, des pixels consistent respectivement en des vecteurs d'entiers traduisant chacun une composante d'une couleur primaire, par exemple selon le codage informatique connu sous l'abrégé RVB, pour Rouge, Vert Bleu ou RGB pour Red, Green, Blue, selon une terminologie anglo-saxonne. Une représentation numérique sous une forme matricielle de pixels consiste en une image et peut être enregistrée dans la mémoire de données du dispositif électronique.

Les dispositifs électroniques connus, tels que des téléphones mobiles intelligents, permettent une capture d'images, photographies ou vidéos, de très bonne qualité à la condition de respecter un positionnement relativement statique du dispositif électronique durant une capture d'une scène, voire d'imposer une immobilisation temporaire dudit dispositif électronique lors d'une telle capture.

Lorsqu'un utilisateur d'un tel dispositif électronique connu est en mobilité et qu'il réalise une pluralité de photographies alors que ledit dispositif électronique de capture n'était pas tenu de manière stable, une séance de visionnage de ladite pluralité de photographies sur un écran dudit dispositif électronique ou d'un objet électronique tiers, peut rapidement se révéler très déplaisante pour un spectateur. Ce dernier n'a pas d'autre choix que, d'instinctivement ou spontanément, se contorsionner ou agiter en tous sens sa tête pour tenter de superposer son champ de vision sur des horizons virtuels des photographies particulièrement fluctuants. Dans certains cas, une séance de visionnage peut engendrer chez un spectateur une sensation de mal des transports lorsque ladite pluralité de photographies est restituée ou sortie par un écran sous la forme d'un flux d'images continu.

Pour tenter de réduire ce désagrément, une personne en mobilité qui est à l'origine d'une capture de scènes, donc d'une production d'images d'horizons respectifs différents, peut mettre en oeuvre une opération manuelle et subséquente de recadrage des images, généralement fastidieuse, préalablement à une séance de visualisation. En variante, ladite personne doit être particulièrement attentive au positionnement ou à l'orientation dans l'espace de son dispositif électronique lors desdites captures de scènes, ce qui la limite dans sa capacité de capture de scènes voire, obère son agilité de déplacement et sa capacité de concentration nécessaires à son évolution. Une telle opération devient quasi insurmontable ou impossible lorsque ladite personne est en pleine évolution dynamique, par exemple en randonnée, roulant à bicyclette, en excursion, voire en escalade. Pour toutes ces raisons, une capture de scènes pour générer une pluralité de photographies ou de vidéos en pleine mobilité se traduit à l'heure actuelle, comme évoqué précédemment, par une séance de visualisation incommodante ou peu confortable pour le spectateur.

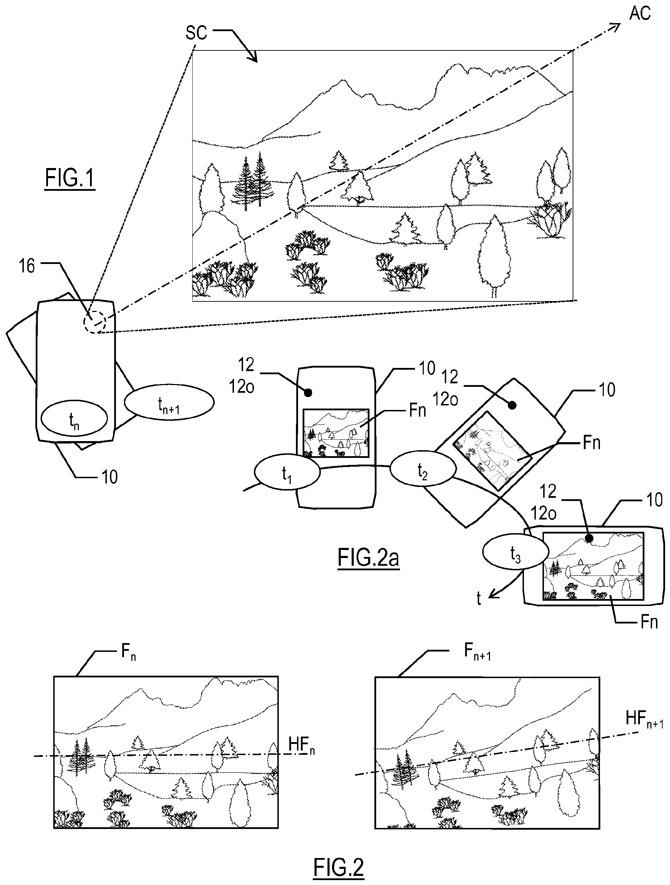

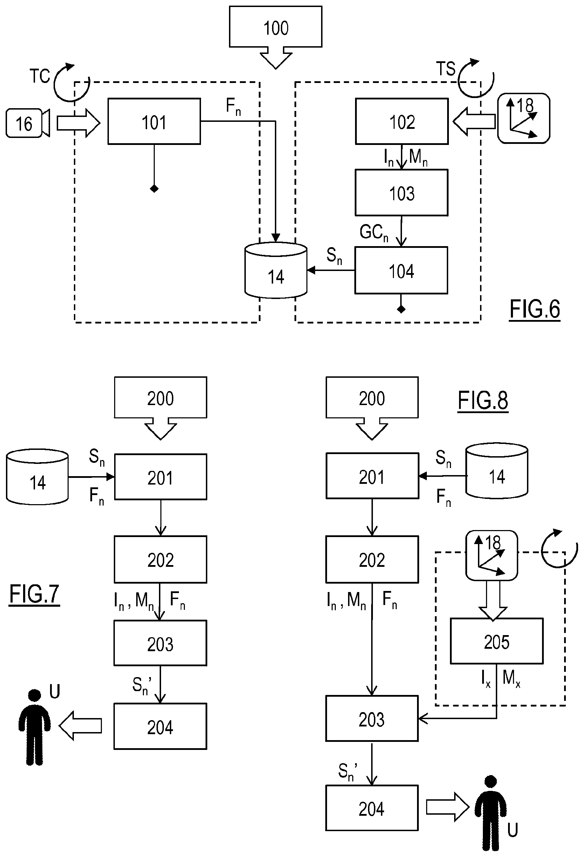

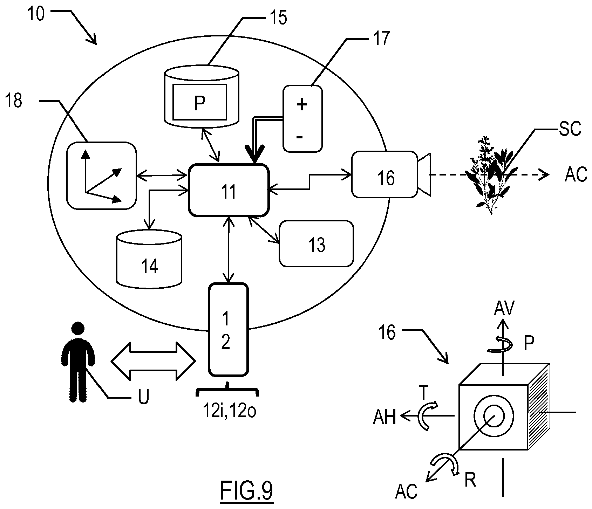

La figure 1 décrit une situation selon laquelle un utilisateur, non représenté sur ladite figure 1, utilise un dispositif électronique 10, sous la forme d'un téléphone mobile intelligent, également connu sous l'appellation anglo-saxonne « smartphone », pour prendre une ou plusieurs photographies ou vidéos d'une scène SC, en l'espèce un paysage de lac de montagne. Comme l'indique, à titre d'exemple non limitatif, la figure 9, un tel dispositif électronique 10 comprend un ou plusieurs moyens de capture 16 tels qu'un appareil photographique numérique ou une caméra numérique. Une image produite lors d'une capture d'une scène SC, symbolisée sur la figure 9 par un végétal, est une première représentation numérique de ladite scène SC qui peut être qualifiée de « matricielle » puisqu'elle consiste en une matrice de pixels encodant respectivement des vecteurs de valeurs entières traduisant chacune une composante d'une couleur primaire, par exemple selon le codage informatique connu sous l'abrégé RVB, pour Rouge, Vert Bleu ou RGB pour Red, Green, Blue, selon une terminologie anglo-saxonne. Pour être conservée, une telle première représentation numérique est enregistrée dans une mémoire de données 14 du dispositif électronique 10. Comme l'indique la figure 9, un tel dispositif électronique 10 comporte également une unité de traitement 11, sous la forme d'un ou plusieurs microcontrôleurs ou microprocesseurs coopérant, via un bus électrique, avec une mémoire de programmes 15 chargée d'enregistrer un ou plusieurs produits programmes d'ordinateur P sous la forme chacun d'une pluralité d'instructions de programme interprétables ou exécutables par ladite unité de traitement 11. Une telle exécution ou interprétation d'instructions d'un programme P par ladite unité de traitement 11 provoque la mise en oeuvre de procédés, dont certains sont conformes à l'invention, comme nous le verrons ultérieurement en liaison avec l'exemple non limitatif des procédés 100 et 200 décrits respectivement par les figures 6, 7 et 8. Un dispositif électronique 10 comporte un ou plusieurs moyens de capture 16, tels qu'une caméra ou un appareil photographique, ce ou ces derniers étant intégrés au dispositif électronique 10 et donc solidaires de celui-ci. En variante, un moyen de capture 16 peut être externe audit dispositif électronique 10 et coopérer avec ce dernier, plus précisément avec l'unité de traitement 11, grâce à une liaison filaire ou une liaison sans fil, selon tout protocole de communication connu. Dans ce dernier cas, des mouvements du moyen de capture 16 peuvent être dissociés de ceux du dispositif électronique 10 en tant que tel. Pour des raisons de simplification, nous considérerons par la suite, que tout moyen de capture 16 est solidaire du dispositif électronique 10.

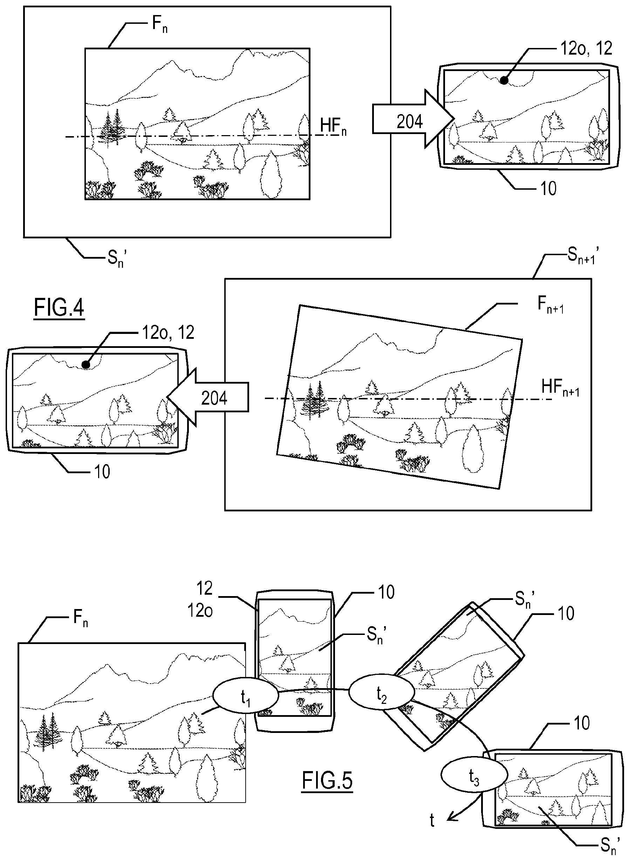

La mémoire de données 14 peut être, pour tout ou partie, électriquement effaçable afin d'être mise à jour par l'unité de traitement 11. Généralement, une section de ladite mémoire de données 14 n'est pas effaçable ou est protégée par un mécanisme de sécurité. Une telle section est généralement réservée pour enregistrer notamment la valeur d'une donnée d'identification unique caractérisant un dispositif électronique particulier au regard d'autres dispositifs pairs. Une telle mémoire de données 14 peut en outre comporter d'autres structures de données, comme nous le verrons ultérieurement en lien avec la description d'un procédé 100 conforme à l'invention et tel que décrit à titre d'exemple par les figures 4 et 6. Les mémoires de programmes 15 et de données 14 peuvent consister chacune en une ou plusieurs entités physiquement distinctes, voire ne constituer qu'une seule et même entité physique.

Pour permettre à un utilisateur humain U d'interagir avec ledit dispositif électronique 10, par exemple pour provoquer la capture d'une scène SC, ledit dispositif électronique 10 comporte une interface homme-machine d'entrée 12i, par exemple sous la forme d'un ou plusieurs boutons, voire d'un clavier. Le dispositif électronique 10 comporte en outre une ou plusieurs interfaces homme-machine de sortie 12o, pour restituer à un utilisateur humain U un contenu numérique. Une telle interface homme-machine de sortie 12o peut consister en un écran d'ordinateur pour afficher une image ou un flux vidéo, un haut-parleur pour restituer un son, etc. Dans le cas d'un dispositif électronique 10 sous la forme d'un téléphone mobile intelligent, certaines interfaces homme-machine d'entrée 12i et de sortie 12o peuvent ne consister qu'en une seule et même interface homme-machine 12 sous la forme d'un écran d'ordinateur tactile, par exemple. A l'instar du ou des moyens de capture 16, des interfaces homme-machine d'entrée 12i ou de sortie 12o, ou encore d'entrée et de sortie 12, peuvent être intégrées au boîtier ou corps dudit dispositif électronique 10. Une interface homme-machine 12i, 12o, 12 peut, en variante ou en complément, être extérieure audit boîtier ou corps du dispositif électronique 10 et coopérer avec l'unité de traitement 11 via une liaison filaire ou sans fil. Un dispositif électronique 10 peut en outre comporter une horloge interne 13, nommée généralement par l'acronyme SoC, pour l'expression anglo-saxonne « System on Chip » et une batterie 17 destinée à alimenter en énergie électrique les organes électroniques dudit dispositif électronique 10, précédemment évoqués. L'horloge interne peut être exploitée par l'unité de traitement 11 pour horodater une capture, une création ou mise à jour d'une structure de données, etc.

Certains dispositifs électroniques 10, tels que des téléphones mobiles intelligents ou encore des tablettes tactiles, comportent un ou plusieurs capteurs de mouvement 18, comme par exemple une centrale inertielle, un ou plusieurs gyroscopes, ou « G-sensors » selon une terminologie anglo-saxonne, voire encore un ou plusieurs magnétomètres, pour déterminer une orientation, c'est-à-dire une position angulaire selon un, deux ou trois axes par rapport à un référentiel inertiel ou galiléen, voire une trajectoire décrite par le dispositif électronique 10 dans l'espace. Les informations délivrées par de tels capteurs 18 sont exploitées par l'unité de traitement 11 pour la mise en oeuvre d'applications de type boussole, prise de niveau ou encore sous la forme d'un jeu pour lequel l'orientation, par exemple dudit dispositif électronique 10 dans un plan sensiblement horizontal, provoque un déplacement d'un objet graphique affiché sur un écran.

La figure 1 décrit une situation selon laquelle un utilisateur, non représenté sur ladite figure, d'un dispositif électronique 10, en l'espèce un téléphone mobile intelligent muni d'un moyen de capture matriciel consistant en une caméra intégrée 16, réalise une série de captures d'image d'un paysage montagnard SC. Selon cette figure 1, ledit utilisateur se déplace ou est en position d'équilibre instable. Il ne peut donc pas maintenir de manière stable son téléphone 10 durant son évolution. Ce peut être le cas, par exemple, lorsque la capture est réalisée alors que le « photographe » roule à bicyclette sur un sentier accidenté ou évolue en randonnée ou en escalade. Ainsi, à un instant $t_n$, le téléphone mobile intelligent 10 est tenu sensiblement verticalement. Il se retrouve en revanche, à l'instant $t_{n+1}$, incliné d'une trentaine de degrés sur la gauche de son utilisateur autour de l'axe de capture AC de la caméra intégrée 16. Comme l'indique la figure 2, cette situation conduit à produire deux images, sous la forme de deux premières représentations numériques $F_n$ et $F_{n+1}$, présentant des horizons virtuels $HF_n$ et $HF_{n+1}$, symbolisés par des lignes discontinues, mutuellement sécants.

En effet, l'image $F_n$, résultant de la capture de la scène SC à l'instant $t_n$, présente un horizon virtuel $HF_n$ sensiblement horizontal. En revanche, l'horizon virtuel $HV_{n+1}$ de l'image $F_{n+1}$ est incliné d'une trentaine de degrés par rapport à l'horizontale, traduisant l'inclinaison du dispositif électronique 10 durant la phase de capture.

A l'aide d'un téléphone mobile intelligent connu 10, ou de tout autre équipement électronique appartenant à l'état de l'art, une séance de visualisations consécutives et itératives des deux images $F_n$ et $F_{n+1}$ sur un écran peut devenir particulièrement inconfortable pour un spectateur. Ce dernier doit en effet instinctivement compenser la variabilité desdits horizons virtuels $HV_n$ et $HV_{n+1}$ en modifiant son angle de vue, par des rotations incessantes de sa tête autour de son axe de vision, ou en modifiant l'orientation de l'écran dans son champ de vision pour atténuer un ressenti de roulis des images, ressenti devenant particulièrement intense lors d'un visionnage d'un flux de nombreuses images présentant respectivement des horizons virtuels particulièrement variables les uns par rapport aux autres. Pour tenter de résoudre cet inconvénient, le spectateur, le photographe ou une tierce personne doit réaliser une séance fastidieuse préalable au visionnage, pour recadrer, plus précisément pour mettre en oeuvre une correction de nombreuses images par rotations affines de chacune d'elles, au moyen d'un outil informatique adapté, pour que lesdites images corrigées recouvrent chacune un horizon sensiblement horizontal, du moins cohérent ou parallèle avec les horizons virtuels des autres images résultant de captures durant lesquelles le moyen de capture 16 décrivait un roulis significatif autour de l'axe de capture AC.

La figure 2a illustre également un deuxième inconvénient complémentaire au précédent et induit par des dispositifs électroniques 10 selon des procédés de visualisation d'images connus. De tels dispositifs électroniques 10, sous la forme de téléphones mobiles intelligents ou encore certaines tablettes à écran tactile, disposent d'un logiciel de visualisation, généralement appelé « media player » selon une terminologie anglo-saxonne, qui est implanté dans leur mémoire de programmes et qui provoque, sous l'action d'une unité de traitement, un affichage constant d'une image sur l'écran 12o dudit dispositif électronique 10, sensiblement aligné sur l'horizon virtuel dudit écran, quand bien même ledit écran 12o décrive une rotation dans un plan sensiblement vertical. La figure 2a montre une image $F_n$, capturée en mode paysage, affichée sur la partie centrale de l'écran 12o d'un téléphone 10, alors que ce dernier, en un instant $t_1$, est tenu sensiblement vertical dans le champ de vision d'un utilisateur. L'écran 12o du téléphone 10 étant rectangulaire, l'image $F_n$ présentant un format « paysage », elle n'occupe qu'une partie centrale dudit écran 12o, cinquante pourcents de la capacité d'affichage de ce dernier n'étant pas mise à profit. Ledit téléphone 10, par conséquent l'écran 12o de ce dernier, décrit une première rotation dans le sens des aiguilles d'une montre d'environ quarante-cinq degrés. L'horizon virtuel de l'image $F_n$ affichée par ledit écran 12o s'incline au gré de la rotation du téléphone 10 pour décrire lui-même une inclinaison de quarante-cinq degrés en un instant $t_2$. Certains procédés de visualisation mis en oeuvre par des téléphones mobile intelligents provoquent en outre une rotation automatique d'une telle image lorsque les dispositifs électroniques passent brutalement d'une station verticale à une station horizontale. C'est le cas du téléphone 10 présenté sur la figure 2a. Ainsi, alors que ledit téléphone 10 poursuit une rotation horaire dans le champ de vision de son utilisateur, l'image $F_n$ affichée se retrouve agrandie pour occuper l'intégralité de l'écran 12o, lorsque le téléphone atteint, en un instant $t_3$, une inclinaison de quatre-vingt-dix degrés. La figure 2a permet d'illustrer l'inconfort que doit endurer ou que doit compenser un spectateur pour visualiser, ne serait-ce qu'une image, alors que ledit spectateur ne peut maintenir son dispositif électronique 10 dans une position sensiblement stable dans son champ de vision. L'image $F_n$ affichée se trouve régulièrement inclinée, voire redimensionnée durant la course du téléphone 10.

Les deux phénomènes illustrés par les figures 2 et 2a peuvent s'additionner, selon le cas d'espèce, rendant très pénible une séance de visualisation d'images, respectivement capturées selon des horizons virtuels mutuellement sécants, alors que l'interface homme-machine de sortie 12o assurant l'affichage desdites images, est elle-même mobile en rotation dans le champ de vision d'un spectateur.

Le document WO 2014/031830 A1 (SMUGMUG INC [US], 27 février 2014) divulgue un procédé de capture et de visionnage d'une image numérique dans lequel les données d'un accéléromètre sont utilisées lors de la capture pour redresser l'image capturée avant son enregistrement.

Le document US 2011/228112 A1 (KAHEEL AYMAN [EG] ET AL, 22 septembre 2011) divulgue que les données d'orientation de capture d'une image peuvent être sauvegardées avec l'image capturée et que ces données peuvent être utilisées pour redresser l'image lors de l'affichage.

Le document EP 3 123 732 A1 (6115187 CANADA INC D/B/A IMMERVISION INC [CA], 1 février 2017) divulgue le stockage de métadonnées, comprenant entre autres l'orientation de l'appareil de capture lors de la capture, sous forme de graphique tel qu'un code-barre ou un QR-code incrusté dans une portion non visible de l'image. Ce document divulgue également que ces données peuvent être utilisées pour redresser l'image lors de l'affichage. 1

Le document US 2014/118256 A1 (SONODA NAO [JP] ET AL, 1 mai 2014) divulgue que l'on peut détecter, au moyen d'un accéléromètre, l'orientation de l'écran d'un appareil de capture, et changer, lors de la capture, l'orientation de l'image affichée sur la base des informations d'orientation. 1

L'invention est définie par les revendications. Elle permet de supprimer l'inconvénient ci-dessus en proposant un procédé, que l'on qualifiera « d'hyper stabilisation », mis en oeuvre, par un dispositif électronique comportant des moyens de capture d'une scène et d'une interface de sortie ou de visualisation d'une image ou d'un flux d'images résultant d'une telle capture, pour dissocier l'orientation de ladite image ou dudit flux d'images de l'orientation dans l'espace du dudit dispositif électronique, par exemple un téléphone mobile intelligent, lors de la visualisation de ladite image ou dudit flux, maintenant ainsi un horizon sensiblement constant. Le spectateur, c'est-à-dire toute personne exploitant l'interface de sortie d'un tel dispositif électronique, peut visualiser une image ou une série d'images d'horizon(s) stable(s) quand bien même ledit dispositif électronique décrive une rotation complète dans un plan sensiblement vertical.

Parmi les nombreux avantages apportés par l'invention, nous pouvons mentionner qu'un dispositif électronique, agencé pour mettre en oeuvre un procédé pour afficher une image indépendamment de l'orientation d'une interface homme-machine de sortie :

- améliore grandement l'expérience et le confort du spectateur lorsque ce dernier visualise une ou plusieurs images préalablement produites à partir d'une ou plusieurs captures de scènes sans que la personne, à l'origine de celles-ci, ne porte un soin particulier à l'orientation des moyens de capture lors de la prise de clichés ;
- supprime toute tâche fastidieuse de recadrage manuel d'images résultant d'une capture de scènes préalablement à la visualisation desdites images ;
- maintient une ligne d'horizon virtuel sensiblement constant de toute image produite, indépendamment de l'orientation de l'interface homme-machine de sortie du dispositif électronique utilisé pour afficher ladite image, quand bien même ladite interface homme-machine décrive une rotation autour de l'axe de vision du spectateur ;
- n'induit aucune perte ou rognage d'une image affichée, ni même de séquences inconfortables d'effets variables de zooms avant et arrière, lorsqu'une interface de sortie d'un dispositif électronique utilisé pour un visionnage d'images décrit une telle rotation complète autour de l'axe de vision du spectateur.

A cette fin, il est notamment prévu un procédé préparatoire au visionnage d'une image numérique, non couvert en tant que tel par l'invention telle que revendiquée, découlant d'une capture d'une scène par un moyen de capture matriciel d'un dispositif électronique. Un tel procédé est conçu pour être mis en oeuvre par une unité de traitement dudit dispositif électronique, ledit dispositif électronique comportant en outre une mémoire de données, un capteur de mouvement dudit moyen de capture. Un tel procédé comporte tout d'abord une étape pour déclencher une capture d'une scène par le moyen de capture et produire une représentation numérique de ladite scène sous la forme d'une image consistant en un tableau de pixels dont les nombres de lignes et de colonnes sont prédéterminés. Pour dissocier l'orientation du moyen de capture d'une scène de celle d'une image résultant d'une capture de ladite scène et destinée à être visionnée éventuellement en mobilité, ledit procédé comporte en outre :

- une étape pour collecter des données contextuelles de capture délivrées par le capteur de mouvement ;
- une étape pour encoder lesdites données contextuelles et produire un contenu graphique caractérisant une orientation du moyen de capture au regard de la scène capturée lors d'une capture de celle-ci ;
- une étape pour produire une deuxième représentation numérique associée à la première représentation numérique, ladite deuxième représentation numérique consistant en un tableau de pixels dont les nombres de lignes et de colonnes sont prédéterminés ;
- une étape pour incruster dans ladite deuxième représentation numérique le contenu graphique caractérisant une orientation du moyen de capture préalablement produit et enregistrer, dans la mémoire de données, ladite deuxième représentation numérique ainsi associée à la première représentation numérique.

L'invention prévoit en outre que les nombres de lignes et de colonnes prédéterminés de la deuxième représentation numérique soient supérieurs aux nombres de lignes et de colonnes de la première représentation numérique.

Selon un mode de réalisation avantageux, l'étape pour collecter des données contextuelles de capture délivrées par le capteur de mouvement peut être mise en oeuvre selon une période prédéterminée.

De la même manière, lorsque le dispositif électronique peut comporter en outre une horloge interne, l'étape pour encoder lesdites données contextuelles et produire un contenu graphique peut exploiter l'horodatage délivré par une horloge interne au dispositif électronique lors de la collecte des données délivrées par le capteur de mouvement.

Pour faciliter l'exploitation future d'une deuxième représentation numérique, produite selon l'invention par un procédé de visionnage, l'étape pour incruster dans ladite deuxième représentation numérique le contenu graphique peut consister à incruster ce dernier dans une région périphérique de ladite deuxième représentation numérique.

Pour adapter le fonctionnement d'un dispositif électronique connu, l'invention concerne également un produit programme d'ordinateur comportant des instructions de programme exploitables par un ordinateur qui, lorsqu'elles sont exécutées ou interprétées par une unité de traitement dudit ordinateur, provoquent la mise en oeuvre d'un procédé préparatoire au visionnage d'une image numérique conforme à l'invention.

Il est également décrit un dispositif électronique comportant une unité de traitement, une mémoire de données, une mémoire de programmes, un moyen de capture matriciel d'une scène, un capteur de mouvement dudit moyen de capture, les instructions de programme d'un produit programme d'ordinateur tel qu'exprimé précédemment étant inscrites dans la mémoire de programmes dudit dispositif électronique.

Pour exploiter le fruit de la mise en oeuvre d'un procédé préparatoire au visionnage d'un image tel que décrit ci-dessus, l'invention concerne un procédé de visionnage d'une image numérique découlant d'une capture d'une scène, par un moyen de capture matriciel d'un tel premier dispositif électronique, telle que défini dans les revendications. Ledit procédé de visionnage est conçu pour être mis en oeuvre par une unité de traitement d'un deuxième dispositif électronique, ledit deuxième dispositif électronique comportant en outre une mémoire de données, une interface homme-machine de sortie. Un tel procédé de visionnage comporte :

- une étape pour lire, dans la mémoire de données, une première et une deuxième représentations numériques en lien avec la capture d'une scène, lesdites première et deuxième représentations numériques résultant conjointement d'une mise en oeuvre préalable d'un procédé préparatoire au visionnage d'une image numérique conforme à l'invention par une unité de traitement dudit premier dispositif électronique ;
- une étape pour identifier, dans la deuxième représentation numérique, et décoder un contenu graphique caractérisant une orientation des moyens de capture au regard de la scène capturée lors d'une capture de celle-ci et produire des données contextuelles de capture ;
- une étape pour déterminer un horizon virtuel de la première représentation numérique à partir des données contextuelles déduites du décodage dudit contenu graphique ;
- une étape pour produire une image affichable par l'interface homme-machine de sortie à partir de ladite deuxième représentation numérique par superposition de ladite première représentation numérique, après rotation de celle-ci autour de son centre, de sorte que l'horizon virtuel de la première représentation numérique préalablement déterminé soit sensiblement parallèle à une ligne de pixels de ladite deuxième représentation numérique ;
- une étape pour provoquer un affichage de ladite une image affichable par l'interface homme-machine de sortie du deuxième dispositif électronique.

Pour pouvoir regarder une image en mobilité et dissocier ledit visionnage de celle-ci d'une orientation instable de l'interface homme-machine de sortie dans le champ de vision d'un spectateur, le deuxième dispositif électronique comporte un capteur de mouvement de l'interface homme-machine de sortie. Ledit procédé de visionnage comprend en outre, préalablement à l'étape pour produire une image affichable, une étape pour collecter des données contextuelles de visionnage délivrées par le capteur de mouvement caractérisant une orientation de l'interface homme-machine de sortie et déterminer un horizon virtuel de ladite interface homme-machine de sortie. L'étape pour produire une image affichable par l'interface homme-machine de sortie peut alors consister en outre à mettre en oeuvre une rotation de ladite image affichable par rapport au centre de celle-ci, de sorte que l'horizon virtuel de ladite image affichable soit sensiblement parallèle à l'horizon virtuel de l'interface de sortie.

Selon un mode de réalisation avantageux, les premier et deuxième dispositifs électroniques peuvent ne constituent qu'une seule et même entité physique.

Pour adapter le fonctionnement d'un équipement connu, l'invention concerne également un produit programme d'ordinateur comportant des instructions de programme exploitables par un ordinateur, qui, lorsqu'elles sont exécutées ou interprétées par une unité de traitement dudit ordinateur, provoquent la mise en oeuvre d'un procédé de visionnage d'une image numérique selon l'invention.

L'invention concerne également un dispositif électronique comportant une unité de traitement, une mémoire de données, une mémoire de programmes, une interface homme-machine de sortie, les instructions de programme d'un tel produit programme d'ordinateur étant inscrites dans la mémoire de programmes dudit dispositif électronique.

Selon un mode de réalisation préféré mais non limitatif de l'invention, le capteur de mouvement de tels dispositifs électroniques mettant en oeuvre un procédé conforme à l'invention peut consister en une centrale inertielle et/ou en un magnétomètre.

Selon un mode d'application préféré mais non limitatif de l'invention, de tels dispositifs électroniques mettant en oeuvre un procédé conforme à l'invention peuvent consister en un téléphone mobile intelligent.

D'autres caractéristiques et avantages apparaîtront plus clairement à la lecture de la description qui suit et à l'examen des figures qui l'accompagnent parmi lesquelles :

- la figure 1 d'ores et déjà décrite illustre un exemple de captures d'une scène à l'aide d'un dispositif électronique, en l'espèce un téléphone mobile intelligent, comportant un moyen de capture matriciel, lorsque l'orientation dudit dispositif électronique est variable autour d'un axe de capture de ladite scène ;
- la figure 2 d'ores et déjà décrite illustre, d'une part, deux images résultant d'une même scène capturée conformément à l'exemple décrit par la figure 1, c'est-à-dire lorsque le dispositif électronique est mobile autour d'un axe de capture durant la phase de capture de ladite scène, lesdites images présentant par conséquent des horizons respectifs mutuellement sécants, et d'autre part, ladite figure 2 illustre l'inconfort d'un spectateur visualisant, à l'aide d'un téléphone mobile intelligent connu, lesdites deux images consécutivement, ledit spectateur devant compenser la variabilité desdits horizons en modifiant son angle de vue ou l'orientation dudit téléphone dans son champ de vision ;

- la figure 2a d'ores et déjà décrite illustre également l'inconfort d'un spectateur visualisant, à l'aide d'un téléphone mobile intelligent connu, une image résultant d'une même scène capturée conformément à la situation illustrée par la figure 1, lorsque ledit téléphone est mobile autour de l'axe de vision du spectateur durant le visionnage de ladite image, l'image présentée dans le champ de vision du spectateur suivant l'orientation du téléphone, voire étant « recadrée » automatiquement selon la rotation dudit téléphone dans un plan sensiblement vertical, ledit spectateur devant redoubler d'efforts physiques pour tenter de conserver une vision stable de ladite image dans son champ de vision ;

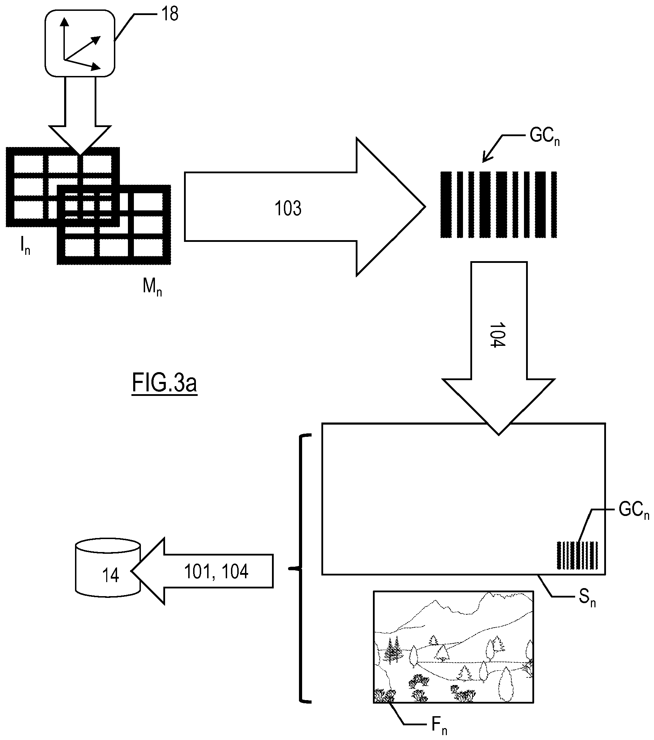

- la figure 3a illustre respectivement des étapes d'un procédé, par ailleurs décrit sous la forme d'un organigramme fonctionnel par la figure 6, d'encodage puis d'incrustation de données contextuelles, en lien avec une capture d'une scène, sous la forme d'une information graphique associée à l'image découlant de ladite capture pour faciliter la visualisation future de ladite image ;

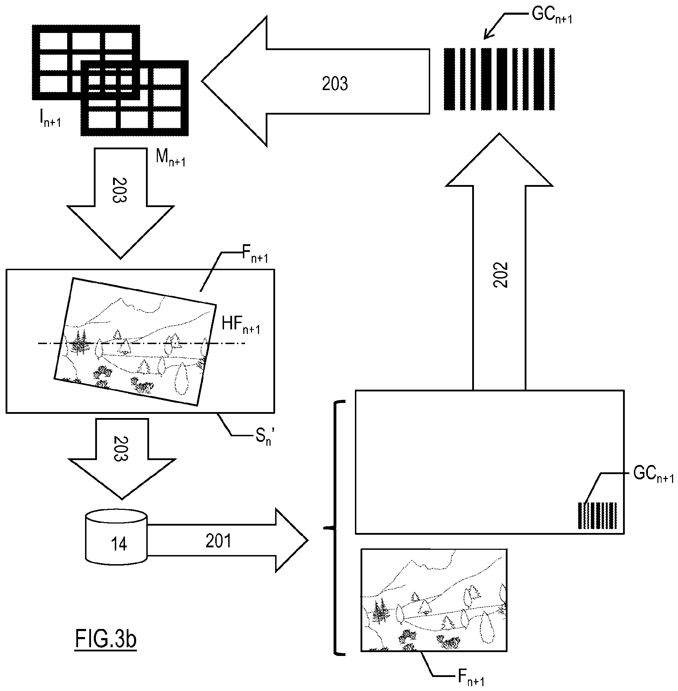

- la figure 3b illustre respectivement des étapes d'un procédé de visionnage, par ailleurs décrit sous la forme d'un organigramme fonctionnel par la figure 7;
- la figure 4 illustre des premiers effets techniques et conforts procurés par l'invention grâce à la mise en oeuvre d'un procédé de visualisation de deux images capturées selon la situation décrite par la figure 1, dont un exemple d'organigramme fonctionnel est par ailleurs illustré par la figure 7, les deux images affichées par une interface homme-machine de sortie, en l'espèce un écran tactile d'un téléphone mobile intelligent, présentant sensiblement un même horizon lors de leur visionnage, sans que ledit spectateur n'ait eu à recadrer préalablement celles-ci ;
- la figure 5 illustre des deuxièmes effets techniques et conforts procurés par l'invention grâce à la mise en oeuvre d'un procédé de visualisation d'une image capturée selon la situation décrite par la figure 1, dont un exemple d'organigramme fonctionnel est par ailleurs illustré par la figure 8, l'image affichée par une interface homme-machine de sortie, en l'espèce un écran tactile d'un téléphone mobile intelligent, présentant sensiblement un horizon stable lors de son visionnage, alors que ledit spectateur ne peut conserver une orientation fixe de téléphone dans son champ de vision ;
- la figure 6 illustre un mode de réalisation d'un procédé conforme à l'invention pour, préalablement à une visualisation d'une image, associer à celle-ci des données contextuelles de capture ;
- les figures 7 et 8 illustrent deux modes de réalisation d'un procédé conforme à l'invention pour restituer graphiquement une image, préalablement associée à des données contextuelles de capture conformément au précédent procédé illustré par la figure 6, ledit deuxième mode de réalisation permettant en outre un affichage de ladite image selon une orientation sensiblement horizontale pour le spectateur, quand bien même l'interface homme-machine de sortie du dispositif électronique de visionnage, en l'espèce l'écran d'un téléphone mobile intelligent, décrive une rotation, dans un plan sensiblement vertical, autour de l'axe de vision dudit spectateur ;
- la figure 9, partiellement d'ores et déjà décrite, décrit une architecture fonctionnelle d'un dispositif électronique configuré pour, d'une part, réaliser une ou plusieurs captures de scènes et ainsi produire une ou plusieurs images numériques, et d'autre part, afficher via une interface homme-machine de sortie ladite ou lesdites images, de sorte qu'un spectateur humain puisse la ou les visualiser.

L'invention permet de supprimer tout ou partie des inconvénients découlant de l'exploitation de dispositifs électroniques de capture ou de visionnage connus en adaptant tout d'abord de tels dispositifs électroniques 10 pour que ces derniers soient configurés pour associer ou intégrer des données contextuelles durant la capture d'images photographiques ou de vidéos, lesdites données contextuelles caractérisant l'orientation des moyens de capture au regard de la scène capturée. D'autre part, l'invention prévoit également d'adapter de tels dispositifs électroniques, pour que ces derniers puissent exploiter de telles données contextuelles additives lors de la visualisation des images, de sorte que lesdites images présentent chacune un horizon virtuel sensiblement horizontal indépendamment de l'orientation de l'interface de sortie desdits dispositifs électroniques dans un plan sensiblement vertical durant une séance de visualisation.

Pour cela, l'invention prévoit d'exploiter le capteur de mouvement 18, illustré par la figure 9, non plus pour fournir des données à des applications accessoires liées au déplacement du corps d'un dispositif électronique 10, mais pour mesurer des mouvements appliqués au moyen de capture 16, produisant ainsi des données contextuelles de capture d'une scène. Lorsqu'un dispositif électronique 10 coopère avec un moyen de capture 16 externe, la notion de capteurs de mouvement 18 précédemment évoqués s'étend à la notion de capteurs configurés ou agencés pour caractériser en outre les mouvements décrits par ledit moyen de capture externe 16. La figure 9 illustre par ailleurs une manière de caractériser un mouvement ou une orientation dans l'espace d'un moyen de capture 16, symbolisé par un cube comportant une lentille 16L dont l'axe de capture, sensiblement normal à la scène capturée, est symbolisé par un axe AC traversant la lentille 16L ou l'optique d'une caméra, en son centre. Ledit moyen de capture 16, décrit sous la forme d'un cube à des fins pédagogiques et de vulgarisation sur la figure 9, présente en outre deux axes caractéristiques respectivement vertical AV et horizontal AH, lorsque ledit cube est « posé virtuellement sur un plan horizontal », la face comportant ladite lentille étant perpendiculaire audit plan horizontal. Conformément à l'orientation de la figure 9, lesdits axes AH et AV traversent symboliquement le moyen de capture 16, de droite à gauche pour l'axe AH et de bas en haut pour l'axe AV. Lors d'une capture d'une scène, un tel moyen de capture 16 peut décrire une ou plusieurs rotations ou courses angulaires autour des trois axes AC, AV et AH. Une telle analogie peut être appliquée à une interface homme-machine de sortie 12o dont on souhaiterait connaître une orientation ou un mouvement dans l'espace. L'axe AC décrirait alors un axe de vision, normal à la surface de ladite interface 12o, par exemple un écran d'ordinateur sensiblement plan, et traversant le regard du spectateur.

Lorsqu'un capteur de mouvement 18 d'un moyen de capture 16 consiste en un magnétomètre, celui-ci délivre des données contextuelles à une capture d'une scène, telles qu'un angle entre la composante horizontale de l'axe de capture AC, que nous pourrions nommer également vecteur de champ, et le nord magnétique, et une inclinaison, c'est-à-dire un angle entre ledit axe de capture AC et la surface horizontale. De telles données émanant d'un magnétomètre peuvent se traduire sous la forme d'une matrice ou vecteur de données M = [D (déclinaison) ; I (inclinaison)]. Par la suite du document, nous utiliserons le suffixe 'n' pour spécifier une grandeur ou une structure de données établie, mesurée ou produite à l'instant $t_n$. Ainsi les données du magnétomètre 16, à l'instant $t_n$, seront notées $M_n$.

Lorsque le capteur de mouvement 18 consiste en une centrale inertielle, comme le suggère la figure 9, les données délivrées par ledit capteur 18 consistent en une matrice I de valeurs polaires sous la forme de quaternions [a, b, c, d]. Une telle matrice I, ou $I_n$ à l'instant $t_n$, est de la forme I = [P, T, R] où P (pour « Pan » selon une terminologie anglo-saxonne) caractérise un lacet, c'est-à-dire une rotation autour de l'axe AV, T (pour « Tilt » selon une terminologie anglo-saxonne) caractérise un tangage soit une rotation autour de l'axe AH, et R (pour « Roll » selon une terminologie anglo-saxonne) caractérise un roulis soit une rotation autour de l'axe AC. Les composantes P, T et R se calculent, à titre d'exemples, telles que :

$$P \approx \frac{-180}{\pi} * ArcTangent \frac{2 * (1 - 2 * (c * c + d * d))}{\sqrt{(2 * (a * d + b * c))^2 + (2 * (1 - 2 * (c * c + d * d)))^2 + (2 * (a * d + b * c))}}$$

$$T \approx \frac{-180}{\pi} * ArcSinus \left(2 * (a * c - d * b)\right)$$

$$R \approx \frac{-180}{\pi} * ArcTangent \frac{2 * (1 - 2 * (b * b + c * c))}{\sqrt{(2 * (a * b + c * d))^2 + (2 * (1 - 2 * (b * b + c * c)))^2 + (2 * (a * b + c * d))}}$$

La figure 3a décrit succinctement le principe, évoqué précédemment, consistant à associer, en un instant $t_n$, à une image capturée $F_n$ des données contextuelles $I_n$, $M_n$, lesdites données contextuelles étant délivrées par un capteur de mouvement 18 du moyen de capture 16 d'un dispositif électronique, tel que le dispositif électronique 10 décrit par la figure 9, lorsque celui-ci est adapté pour mettre en oeuvre l'invention. Pour mettre en oeuvre une telle association, l'invention prévoit un premier procédé que nous pouvons qualifier de procédé préparatoire au visionnage d'une image numérique, tel que décrit, à titre d'exemple non limitatif, par la figure 6. En liaison avec lesdites figures 3a et 6, un tel procédé 100, mis en oeuvre par exemple par l'unité de traitement 11 d'un dispositif électronique 10 précédemment décrit en lien avec la figure 9, comporte une première étape 101, éventuellement itérative, par exemple selon une période prédéterminée TC, pour provoquer la capture d'une scène et produire une rafale de photographies ou un flux vidéo. En un instant $t_n$, ladite étape 101 produit ainsi une première représentation numérique $F_n$ d'une scène capturée par le moyen de capture matriciel 16 du dispositif électronique. Une telle première représentation numérique $F_n$ de ladite scène sous la forme d'une image consiste en un tableau de pixels dont les nombres de lignes et de colonnes sont prédéterminés, et dépendent de la résolution souhaitée ou paramétrée lors de la capture de la scène. A titre d'exemple non limitatif, une telle image peut consister en un tableau de mille-neuf-cent-vingt colonnes sur mille-quatre-vingts lignes de pixels.

Parallèlement à la mise en oeuvre de l'étape 101, un procédé 100 comporte un deuxième traitement, éventuellement itératif selon une période TS prédéterminée, par exemple de quatre millisecondes, comportant une étape 102 pour collecter des données contextuelles de capture délivrées par le capteur de mouvement 18. Lorsque ce dernier comprend un magnétomètre, de telles données contextuelles peuvent se traduire sous la forme d'une matrice ou vecteur de données M décrivant une déclinaison et une inclinaison du moyen de capture 16. Comme l'indique la figure 3a, une telle matrice que nous noterons $M_n$ peut être collectée, en un instant $t_n$, à l'étape 102 du procédé 100 illustré par la figure 6. En variante ou en complément, lorsque le capteur de mouvement 18 comprend une centrale inertielle, les données contextuelles collectées à l'étape 102 peuvent se traduire sous la forme d'une matrice I - [P, T, R] où P, T et R caractérisent respectivement un lacet, un tangage et un roulis du moyen de capture 16 au regard de l'axe de capture AC de ce dernier. Une telle matrice sera notée In pour définir lesdites données contextuelles collectées à l'instant $t_n$.

En un instant subséquent tn+1, lesdites données collectées depuis le capteur 18 seraient référencées $I_{n+1}$ et $M_{n+1}$ pour caractériser une capture d'une scène traduite sous la forme d'une image $F_{n+1}$.

Ces données contextuelles de capture $I_n$ et/ou $M_n$, voire $I_{n+1}$ et $M_{n+1}$, sont destinées à être exploitées par un procédé de visualisation d'images conforme à l'invention, tel que l'exemple du procédé 200 décrit ultérieurement en lien avec les figures 7 et 8. Pour faciliter l'exploitation desdites données contextuelles de capture par ce dernier, un procédé 100 comporte, comme l'indiquent les figures 3a et 6, une étape 103 pour encoder lesdites données contextuelles In et/ou Mn, collectées à l'étape 102, sous la forme d'un contenu graphique produit, que nous noterons $GC_n$ caractérisant une orientation du moyen de capture 16 au regard de la scène capturée SC à l'instant $t_n$. Comme le suggère à titre non limitatif la figure 3a, un tel contenu graphique $GC_n$ peut être avantageusement produit sous la forme d'un code à barres en une dimension, c'est-à-dire sous la forme d'une série de barres parallèles d'une même longueur mais de largeurs variables et dont la couleur prédéterminée, par exemple le noir, est distincte de celle d'un fond, par exemple le blanc. Un tel contenu graphique $GC_n$ peut, en variante, consister en un code à barres en deux dimensions, tel un code QR, « QR code » selon une terminologie anglo-saxonne, ou sous la forme de tout autre contenu graphique permettant un codage des informations contextuelles de capture et, in fine un décodage, dudit contenu graphique pour recouvrer la teneur desdites données contextuelles de capture. L'invention prévoit que lesdites données contextuelles encodées puissent en outre être complétées par un horodatage délivré par une horloge 13 du dispositif électronique 10 mettant en oeuvre le procédé 100. Une telle information pourra faciliter l'association future de telles données contextuelles de capture à une première représentation numérique, également horodatée lors de son enregistrement dans la mémoire de données réalisé à l'étape 101.

Pour associer un contenu graphique GCn à une première représentation numérique $F_n$ de la capture d'une scène en un instant $t_n$, voire pour associer un contenu $GC_{n+1}$ à une première représentation numérique $F_{n+1}$ produite en un instant $t_{n+1}$, un procédé 100 comporte une étape 104 pour, tout d'abord, produire une deuxième représentation numérique, dite « surface » que nous référencerons S. Ainsi, une telle deuxième représentation $S_n$ est associée à la première représentation numérique $F_n$ produite à l'instant $t_n$ à l'étape 101. De la même manière, une deuxième représentation $S_{n+1}$ serait associée à la première représentation numérique $F_{n+1}$ produite à l'instant $t_{n+1}$.

Un telle deuxième représentation numérique $S_n$ ou $S_{n+1}$ consiste en un tableau de pixels dont les nombres de lignes et de colonnes sont prédéterminés et supérieurs aux nombres de lignes et de colonnes de la première représentation numérique $F_n$, $F_{n+1}$ qui lui est associée. A titre d'exemple, de tels nombres de lignes et de colonnes d'une deuxième représentation numérique Sn ou Sn+1 peuvent être déterminés comme étant respectivement égaux à une fois et demie les nombres de lignes et de colonnes d'une première représentation $F_n$ ou $F_{n+1}$. L'invention prévoit, en tout état de cause, que de tels nombres soient choisis pour être supérieurs à la capacité de restitution graphique d'une interface de sortie, par exemple un écran, d'un dispositif électronique utilisé pour visualiser lesdites images.

L'étape 104 d'un procédé 100 consiste en outre à « incruster » avantageusement dans une région périphérique de ladite deuxième représentation numérique $S_n$ ou $S_{n+1}$, le contenu graphique $GC_n$ ou $GC_{n+1}$ caractérisant une orientation du moyen de capture 16. Par exemple, une telle région périphérique peut être le coin situé en bas, à droite. Une telle incrustation pourrait être réalisée dans une autre région, c'est-à-dire dans un autre coin ou dans une section latérale de ladite deuxième représentation numérique. Au sens de l'invention et dans tout le document, on entend par « incrustation » toute technique numérique connue permettant de remplacer les valeurs de certains pixels de ladite deuxième représentation numérique $S_n$, $S_{n+1}$ par les pixels du contenu graphique $GC_n$ ou $GC_{n+1}$, ce dernier venant ainsi se superposer à ladite deuxième représentation numérique $S_n$, $S_{n+1}$, ne formant avec elle qu'une seule et même structure de données, comme l'indique la figure 3a. La deuxième représentation numérique $S_n$, $S_{n+1}$, ainsi mise à jour est enregistrée dans la mémoire de données 14 du dispositif électronique mettant en oeuvre ledit procédé 100, conjointement avec la première représentation numérique $F_n$, $F_{n+1}$ enregistrée dans ladite mémoire de données 14 à l'issue de l'étape 101. Seules les références $I_n$, $M_n$, $F_n$, $S_n$, $GC_n$ des structures de données produites à l'instant de capture $t_n$ apparaissent, par mesure de simplification et de lisibilité, sur les figures 3a et 6.

Ainsi se termine un procédé 100 préparatoire à une future visualisation particulièrement fluide et stable d'images produites lors d'une séance de captures éventuellement très dynamiques.

L'invention prévoit à présent l'exploitation des données contextuelles associées à des images capturées selon le procédé préparatoire 100, par la mise en oeuvre d'un procédé de visionnage, tel que le procédé 200 décrit par les figures 3b, 7 et 8. Un tel procédé de visionnage 200 peut être mis en oeuvre par l'unité de traitement 11 du dispositif électronique 10 ayant mis en oeuvre ledit procédé 100 ou par une unité de traitement d'un deuxième dispositif électronique tiers.

Dans le cas où un même dispositif électronique, tel que le dispositif 10 décrit en lien avec la figure 9, mettrait en oeuvre successivement lesdits procédés 100 et 200 pour, d'une part, capturer une scène puis, d'autre part, afficher des images découlant de ladite capture, le procédé 100 peut être considéré comme autant d'étapes préalables à celles du procédé 200.

En variante, lorsque deux dispositifs électroniques distincts sont utilisés pour respectivement mettre en oeuvre lesdits procédés 100 et 200, la mémoire de données dudit deuxième dispositif électronique devra contenir, préalablement à la mise en oeuvre du procédé de visionnage 200, les structures de données $F_n$ et $S_n$ telles qu'étudiées précédemment.

En liaison avec les figures 7, 9, 3b et 4, un procédé de visionnage 200 d'images, préalablement associées à des données contextuelles relatives à une phase de captures de scènes dont elles découlent, est conçu pour être mis en oeuvre par une unité de traitement 11 d'un dispositif électronique 10, ledit dispositif électronique 10 comportant, à l'instar du dispositif illustré par la figure 9, outre une mémoire de données 14, une interface homme-machine de sortie 12o apte à délivrer à un utilisateur humain une restitution graphique desdites images. Une telle interface homme-machine de sortie 12o peut être un écran d'un ordinateur, d'un téléphone mobile intelligent, voire d'une tablette à écran tactile. Ladite interface homme-machine de sortie pourrait également consister en un projecteur agencé pour projeter lesdites images sur un support tiers. En lien avec la figure 4, ladite interface homme-machine de sortie 12o est l'écran tactile 12 d'un téléphone mobile intelligent 10.

Un tel procédé 200 comporte une première étape 201 pour lire, dans la mémoire de données 14 du dispositif électronique 10 mettant en oeuvre ledit procédé 200, une première représentation numérique $F_n$, issue d'une capture d'une scène à un instant $t_n$, et une deuxième représentation numérique $S_n$ associée à ladite première représentation numérique $F_n$, lesdites première et deuxième représentations numériques $F_n$ et $S_n$ résultant conjointement d'une mise en oeuvre préalable d'un procédé 100 préparatoire au visionnage d'une image numérique conforme à l'invention. Une telle mise en oeuvre a pu être réalisée par une unité de traitement d'un dispositif électronique tiers ou par l'unité de traitement 11 du présent dispositif électronique 10 mettant en oeuvre le procédé de visionnage 200. Comme étudié précédemment, les deux représentations numériques $F_n$ et $S_n$ sont des structures de données matricielles, en l'espèce des tableaux de pixels de dimensions distinctes. En outre, une telle deuxième représentation $S_n$, dite « surface », comporte avantageusement dans une région périphérique de celle-ci, des pixels décrivant un contenu graphique $GC_n$ encodant des données contextuelles de la capture de scène dont découle la première représentation numérique $F_n$.

Un procédé de visionnage 200 comporte dès lors une étape 202 pour identifier un tel contenu graphique $GC_n$, caractérisant une orientation d'un moyen de capture, dans ladite deuxième représentation numérique $S_n$. Ladite étape 201 consiste également à décoder un tel contenu graphique GCn et produire des données contextuelles $I_n$ et/ou $M_n$ de capture. Ces données ayant été délivrées de manière originale par un capteur de mouvement du moyen de capture ayant produit la première représentation numérique Fn, le procédé 200 comporte une étape 203 pour déterminer un horizon virtuel $HF_n$ de ladite première représentation numérique $F_n$ à partir des données contextuelles déduites du décodage dudit contenu graphique $GC_n$.

En effet, les données contextuelles dont les valeurs sont ainsi recouvrées permettent d'estimer un tel horizon virtuel $HV_n$, du moins un angle décrit par rapport à un horizon de référence, correspondant à une ligne de pixels de ladite représentation $F_n$, qui aurait été décrit si le moyen de capture avait été parfaitement positionné dans l'espace, à l'instar de celui illustré dans la figure 9 sous la forme d'une structure cubique posée sur un plan virtuel horizontal. L'orientation du moyen de capture autour de l'axe de capture, mesurée à l'aide d'un capteur de mouvement lors de la capture dont découle l'image $F_n$, que ledit capteur de mouvement comporte un magnétomètre et/ou une centrale inertielle, détermine ainsi directement ledit horizon virtuel HVn de la première représentation numérique $F_n$.

L'étape 203 consiste alors à produire une image $S_n'$ de mêmes dimensions que la deuxième représentation numérique $S_n$, qui est affichable par l'interface homme-machine de sortie 12, 12o du dispositif électronique mettant en oeuvre le procédé 200. L'invention prévoit que lesdites représentations numériques $S_n$ et $S_n'$ peuvent consister en la même structure de données. Pour produire une image affichable $S_n'$, l'étape 203 met en oeuvre une incrustation ou une superposition de la première représentation numérique $F_n$ dans la deuxième représentation numérique $S_n$. Une telle incrustation est réalisée en superposant sensiblement les centres respectifs des première et deuxième représentations numériques $F_n$ et $S_n$. L'incrustation de la première représentation numérique $F_n$ est précédée d'une rotation, horaire ou antihoraire, de ladite première représentation numérique $F_n$ autour de son centre, de sorte que l'horizon virtuel $HF_n$ de la première représentation numérique $F_n$ préalablement déterminé soit sensiblement parallèle à une ligne de pixels de ladite deuxième représentation numérique $S_n$. Une telle situation est illustrée par la figure 4. L'horizon virtuel $HV_n$ de la première représentation $F_n$ étant sensiblement horizontal, ladite première représentation numérique est incrustée avec une rotation préalable sensiblement nulle.

En revanche, comme le décrit la figure 3b, lorsque les étapes 201, 202 et 203 du procédé 200 sont appliquées sur une première représentation $F_{n+1}$ et sur une deuxième représentation numérique $S_{n+1}$ qui lui est associée, l'image affichable $S_{n+1}'$ produite en 203 est différente de $S_n'$. En effet, la première représentation numérique $F_{n+1}$ subit à l'étape 203 une rotation horaire de sorte que son horizon virtuel $HV_{n+1}$, estimé à l'étape 202 à partir du contenu graphique $GC_{n+1}$ identifié dans la deuxième représentation numérique $S_{n+1}$, soit sensiblement parallèle à une ligne de pixel de cette dernière. Une telle rotation horaire de ladite première représentation $F_{n+1}$ compense automatiquement, en quelque sorte, la rotation antihoraire effectuée par le moyen de capture lors de la capture d'une scène à l'instant $t_{n+1}$. Les images affichables $S_n'$ et $S_{n+1}'$ peuvent faire l'objet d'un enregistrement dans la mémoire de données 14 du dispositif électronique 10 dont l'unité de traitement 11 met en oeuvre le procédé 200.

Ce dernier comporte alors, comme l'indiquent les figures 4 et 7, une étape 204 pour provoquer un affichage de ladite image affichable $S_n'$ ou $S_{n+1}'$ par l'interface homme-machine de sortie 12, 12o dudit dispositif électronique 10 mettant en oeuvre le procédé 200. Les images $S_n$' et $S_{n+1}$' étant avantageusement de dimensions supérieures à la capacité d'affichage de ladite interface homme-machine de sortie 12, 12o dudit dispositif électronique 10, seuls des pixels communs à la première représentation numérique $F_n$ ou $F_{n+1}$ peuvent être affichés par ladite interface homme-machine de sortie 12, 12o.

En liaison avec la figure 1, lorsque les deux premières représentations découlent de deux captures d'une même scène SC à deux instants distincts $t_n$ et $t_{n+1}$, alors que le moyen de capture, conservant une même position géographique, décrit un unique mouvement s'apparentant à une simple rotation antihoraire autour de l'axe de capture AC, la restitution graphique, provoquée à l'étape 204 et illustrée par la figure 4, donne l'impression au spectateur que les images $S_n$' et $S_{n+1}$' sont identiques. Le confort de visionnage est donc décuplé au regard d'un visionnage connu et illustré par la figure 2. Les images affichées successivement présentant des horizons virtuels sensiblement parallèles ou confondus, suppriment totalement l'effet de roulis que doit compenser manuellement et fastidieusement le spectateur avec un procédé de visionnage connu.

Pour supprimer le deuxième inconfort subi par un spectateur, précédemment évoqué en lien avec la figure 2a, découlant d'une situation selon laquelle un spectateur visualisant, à l'aide d'un téléphone mobile intelligent connu, une image résultant d'une scène capturée alors que ledit téléphone est mobile autour de l'axe de vision du spectateur durant le visionnage de ladite image, l'invention prévoit qu'un procédé 200 permette de dissocier l'orientation de l'interface homme-machine 12o, 12 du dispositif électronique mettant en oeuvre le procédé de visionnage de l'image affichée par celle-ci.

Pour cela, un tel procédé de visionnage 200 est similaire à celui décrit en lien avec la figure 7, à l'exception qu'il comporte une étape additionnelle 205 préalable à la mise en oeuvre de l'étape 203 pour produire une image $S_n$' ou $S_{n+1}$'. Une telle étape 205 consiste à collecter des données contextuelles de visionnage Ix et/ou Mx délivrées par un capteur de mouvement 18, caractérisant, en un instant $t_x$, une orientation de l'interface homme-machine de sortie 12, 12o. Ladite étape 205 détermine, à l'instar de l'horizon virtuel $HV_n$ ou $HV_{n+1}$ d'une première représentation numérique $F_n$ ou $F_{n+1}$, à partir de données contextuelles décrivant une orientation de moyen de capture 16, un horizon virtuel de ladite interface homme-machine de sortie 12, 12o. L'étape 203 pour produire une image $S_n$' ou $S_{n+1}$' affichable par l'interface homme-machine de sortie 12, 12o consiste en outre dans ce cas, à mettre en oeuvre une rotation horaire ou antihoraire de ladite image affichable $S_n$', $S_{n+1}$', par rapport au centre de celle-ci, de sorte que l'horizon virtuel de ladite image affichable $S_n$' ou $S_{n+1}$' soit sensiblement parallèle à l'horizon virtuel de l'interface de sortie 12, 12o.

Ainsi, comme le décrit à titre d'exemple la figure 5, l'image affichée à l'étape 204 semble stable dans le champ de vision du spectateur U, indépendamment du fait que l'interface de sortie 12o, en l'espèce celle 12 d'un téléphone mobile intelligent 10 adapté selon l'invention, décrive une rotation horaire dans ledit champ de vision dudit spectateur. Ainsi, en des instants $t_1$, $t_2$, et $t_3$ selon lesquels ledit téléphone 10 est tout d'abord tenu par le spectateur U verticalement, puis incliné de quarante-cinq degrés dans le sens des aiguilles d'une montre et enfin tenu dans une position horizontale, l'image $S_n$' affichée demeure stable et centrée au regard du centre de l'écran 12 dudit téléphone 10. Un spectateur en mobilité peut donc prendre sereinement en considération le contenu de l'image affichée, quand bien même son téléphone 10 ne puisse demeurer stable dans son champ de vision. Inversement, ledit spectateur U peut avoir le sentiment, en modifiant l'orientation de l'interface homme-machine de sortie 12o, 12 de son dispositif électronique 10, de naviguer dans une image stable plus grande que celle capturée.

Lorsqu'un même dispositif électronique peut être utilisé, à l'instar du dispositif électronique 10 décrit en lien avec la figure 9, pour capturer une scène et pour visualiser une ou plusieurs images résultant de ladite séance de capture, le moyen de capture 16 et l'interface homme-machine de sortie 12o étant solidaires, c'est-à-dire ne présentant aucun degré de liberté au regard du corps ou du boîtier dudit dispositif électronique 10, le capteur de mouvement 18, mesurant les mouvements exercés par ledit dispositif électronique en tant que tel, est exploité pour délivrer les données contextuelles de capture $M_n$, $I_n$ et de visionnage $I_x$, $M_x$ évoquées précédemment. En variante, lorsque le moyen de capture 16 ou l'interface homme-machine de sortie 12o peut présenter des degrés de liberté au regard du dispositif électronique 10 mettant en oeuvre un procédé préparatoire au visionnage d'une image, tel que le procédé 100 illustré par la figure 6, ou un procédé de visionnage d'une image, tel que le procédé 200 illustré par la figure 8, le capteur de mouvement 18 utilisé pour produire, respectivement des données contextuelles de capture Mn, In ou de visionnage Ix, Mx, est solidaire dudit moyen de capture 16 ou de ladite interface 12o pour en mesurer le mouvement.

L'invention prévoit qu'une telle visualisation provoquée à l'étape 204 puisse être disponible en mode plein écran ou en mode fenêtré.

L'invention a été décrite en lien avec un dispositif électronique 10 sous la forme avantageuse d'un téléphone mobile intelligent dont on cherche à optimiser l'usage par un utilisateur en mobilité. L'invention pourrait toutefois s'appliquer à un usage différent que celui visé à titre d'exemple d'application préférée, et/ou à d'autres types de dispositifs électroniques, tels qu'une tablette à écran tactile, un ordinateur portable, un vidéoprojecteur, une caméra numérique, etc.

**Revendications**

1. Procédé (200) de visionnage d'une image numérique découlant d'une capture d'une scène (SC) par un moyen de capture matriciel (16) d'un premier dispositif électronique (10) comportant une mémoire de données (14) et un capteur de mouvement (18) dudit moyen de capture matriciel (16), ledit procédé (200) étant mis en œuvre par une unité de traitement (11) d'un deuxième dispositif électronique (10), ledit deuxième dispositif électronique (10) comportant en outre une mémoire de données (14), une interface homme-machine de sortie (12, 12o) et un capteur de mouvement (18) de l'interface homme-machine de sortie (12, 12o), ledit procédé (200) comportant :

   - une étape (201) pour lire dans la mémoire de données (14) une première représentation ($F_n$, $F_{n+1}$) numérique de ladite scène (SC), et une deuxième représentation ($S_n$, $S_{n+1}$) numérique associée à la première représentation ($F_n$, $F_{n+1}$) numérique de ladite scène (Sc) et lesdites première ($F_n$, $F_{n+1}$) et deuxième ($S_n$, $S_{n+1}$) représentations numériques consistant respectivement en deux tableaux de pixels dont les nombres de lignes et de colonnes sont prédéterminés, lesdites première et deuxième représentations numériques résultant conjointement de la capture préalable de ladite scène (SC) par une unité de traitement (11) dudit premier dispositif électronique (10) ;
   - une étape (202) pour identifier dans la deuxième représentation numérique ($S_n$, $S_{n+1}$) et décoder un contenu graphique ($GC_n$, $GC_{n+1}$) incrusté dans ladite deuxième représentation numérique et caractérisant une orientation des moyens de capture (16) au regard de la scène capturée (SC) lors ($t_n$, $t_{n+1}$) d'une capture de celle-ci (SC) et décoder des données contextuelles ($I_n$, $I_{n+1}$, $M_n$, $M_{n+1}$) de capture comprenant des données d'orientation de capture ayant été délivrées lors de la capture par ledit capteur de mouvement (18) dudit moyen de capture matriciel (16) du premier dispositif électronique (10);
   - une étape (203) pour déterminer un horizon virtuel ($HF_n$, $HF_{n+1}$) de la première représentation numérique ($F_n$, $F_{n+1}$) à partir des données contextuelles déduites du décodage dudit contenu graphique ($GC_n$, $GC_{n+1}$) ;
   - une étape (203) pour produire une image ($S_n'$, $S_{n+1}'$) affichable par l'interface homme-machine de sortie (12, 12o), à partir de ladite deuxième représentation numérique ($S_n$, $S_{n+1}$) par superposition de ladite première représentation numérique ($F_n$, $F_{n+1}$) après rotation de celle-ci autour de son centre, de sorte que l'horizon virtuel ($HF_n$, $HF_{n+1}$) de la première représentation numérique ($F_n$, $F_{n+1}$) préalablement déterminé soit sensiblement parallèle à une ligne de pixels de ladite deuxième représentation numérique ($S_n$, $S_{n+1}$) ;
   - une étape (204) pour provoquer un affichage de ladite image affichable ($S_n'$, $S_{n+1}'$) par l'interface homme-machine de sortie (12, 12o) du deuxième dispositif électronique (10), le nombre de lignes et de colonnes de la deuxième représentation ($S_n$, $S_{n+1}$) numérique étant supérieurs aux nombres de lignes et de colonnes de la première représentation ($F_n$, $F_{n+1}$) numérique ;
   - ledit procédé comportant en outre, préalablement à l'étape (203) pour produire ladite image affichable (Sn', Sn+1'), une étape (205) pour collecter des données contextuelles de visionnage (Ix, Mx), comprenant des données d'orientation de visionnage délivrées par le capteur de mouvement (18) caractérisant une orientation de l'interface homme-machine de sortie (12, 12o) et pour déterminer un horizon virtuel de ladite interface homme-machine de sortie (12, 12o) ;
   - l'étape (203) pour produire ladite image affichable (Sn', Sn+1') consistant en outre à mettre en œuvre une rotation de ladite image affichable (Sn', Sn+1') par rapport au centre de celle-ci, de sorte que l'horizon virtuel de ladite image affichable (Sn', Sn+1') soit sensiblement parallèle à l'horizon virtuel de l'interface de sortie (12, 12o) ;

2. Procédé (200) selon la revendication précédente, pour lequel ladite image affichable (Sn', Sn+1') est de mêmes dimensions que la deuxième représentation numérique (Sn, Sn+1) et produite par incrustation ou superposition de la première représentation numérique (Fn, Fn+1) dans la deuxième représentation numérique (Sn, Sn+1), ladite incrustation comprenant une superposition sensible des centres respectifs des première et deuxième représentations numériques (Fn, Fn+1) et (Sn, Sn +1) précédant ladite rotation de ladite première représentation numérique (Fn, Fn+1) autour de son centre, ladite image affichable (Sn', Sn+1') étant en outre de dimensions supérieures à la capacité d'affichage de ladite interface homme-machine de sortie (12, 12o) dudit dispositif électronique (10), le procédé étant **caractérisé en ce que** seuls des pixels communs à la première représentation numérique (Fn, Fn+1) peuvent être affichés par ladite interface homme-machine de sortie (12, 12o).

3. Procédé (200) selon l'une des revendications précédentes, pour lequel les premier et deuxième dispositifs électroniques ne constituent qu'une seule et même entité physique (10).

4. Produit programme d'ordinateur (P) comportant des instructions de programme exploitables par un ordinateur (10), qui, lorsqu'elles sont exécutées ou interprétées par une unité de traitement (11) dudit ordinateur (10), provoquent la mise en œuvre d'un procédé (200) de visionnage d'une image numérique selon l'une quelconque des revendications précédentes.

5. Dispositif électronique (10) comportant une unité de traitement (11), une mémoire de données (14), une mémoire de programmes (15), une interface homme-machine de sortie (12,12o), **caractérisé en ce que** les instructions de programme d'un produit programme d'ordinateur (P) selon la revendication précédente sont inscrites dans la mémoire de programmes (15) dudit dispositif électronique (10).

6. Dispositif électronique (10) selon la revendication précédente, pour lequel le capteur de mouvement (18) consiste en une centrale inertielle et/ou en un magnétomètre.

7. Dispositif électronique (10) selon l'une quelconque des revendications 4 ou 5, consistant en un téléphone mobile intelligent.

**Patentansprüche**

1. Verfahren (200) zum Betrachten eines digitalen Bildes, das sich aus der Aufnahme einer Szene (SC) durch ein Matrixaufnahmemittel (16) eines ersten elektronischen Geräts (10) ergibt, das einen Datenspeicher (14) und einen Bewegungssensor (18) des genannten Matrixaufnahmemittels (16) umfasst, wobei das genannte Verfahren (200) von einer Verarbeitungseinheit (11) eines zweiten elektronischen Geräts (10) implementiert wird, wobei das genannte zweite elektronische Gerät (10) ferner einen Datenspeicher (14), eine Mensch-Maschine-Ausgangsschnittstelle (12, 12o) und einen Bewegungssensor (18) der Mensch-Maschine-Ausgangsschnittstelle (12, 12o) umfasst, wobei das genannte Verfahren (200) Folgendes beinhaltet:

- einen Schritt (201) zum Lesen, im Datenspeicher (14), einer ersten digitalen Darstellung ($F_n$, $F_{n+1}$) der genannten Szene (SC) und einer mit der ersten digitalen Darstellung ($F_n$, $F_{n+1}$) der genannten Szene (Sc) assoziierten zweiten digitalen Darstellung ($S_n$, $S_{n+1}$), und wobei die erste ($F_n$, $F_{n+1}$) und zweite ($S_n$, $S_{n+1}$) digitale Darstellung jeweils aus zwei Pixeltabellen mit vorbestimmten Reihen- und Spaltenanzahlen bestehen, wobei die erste und zweite digitale Darstellung gemeinsam aus der vorherigen Aufnahme der genannten Szene (SC) durch eine Verarbeitungseinheit (11) des genannten ersten elektronischen Geräts (10) resultieren;
- einen Schritt (202) zum Identifizieren, in der zweiten digitalen Darstellung ($S_n$, $S_{n+1}$), und Decodieren eines grafischen Inhalts ($GC_n$, $GC_{n+1}$), der in die genannte zweite digitale Darstellung eingebettet ist und eine Orientierung der Aufnahmemittel (16) in Bezug auf die aufgenommene Szene (SC) während ($t_n$, $t_{n+1}$) einer Aufnahme derselben (SC) charakterisiert, und Decodieren von Aufnahmekontextdaten ($I_n$, $I_{n+1}$, $M_n$, $M_{n+1}$), die Aufnahmeorientierungsdaten umfassen, die bei der Aufnahme durch den genannten Bewegungssensor (18) des genannten Matrixaufnahmemittels (16) des ersten elektronischen Geräts (10) geliefert wurden;
- einen Schritt (203) zum Bestimmen eines virtuellen Horizonts ($HF_n$, $HF_{n+1}$) der ersten digitalen Darstellung ($F_n$, $F_{n+1}$) anhand von Kontextdaten, die aus der Decodierung des genannten grafischen Inhalts ($GC_n$, $GC_{n+1}$) abgeleitet wurden;
- einen Schritt (203) zum Erzeugen eines anzeigbaren Bildes ($S_n'$, $S_{n+1}'$) durch die Mensch-Maschine-Ausgangsschnittstelle (12, 12o), anhand der genannten zweiten digitalen Darstellung ($S_n$, $S_{n+1}$) durch Überlagern der genannten ersten digitalen Darstellung ($F_n$, $F_{n+1}$) nach der Drehung derselben um ihr Zentrum, so dass der virtuelle Horizont ($HF_n$, $HF_{n+1}$) der zuvor bestimmten ersten digitalen Darstellung ($F_n$, $F_{n+1}$) im Wesentlichen parallel zu einer Pixellinie der genannten zweiten digitalen Darstellung ($S_n$, $S_{n+1}$) ist;
- einen Schritt (204) zum Bewirken einer Anzeige des genannten anzeigbaren Bildes ($S_n'$, $S_{n+1}'$) durch die Mensch-Maschine-Ausgangsschnittstelle (12, 12o) des zweiten elektronischen Geräts (10), wobei die Anzahl der Reihen und Spalten der zweiten digitalen Darstellung ($S_n$, $S_{n+1}$) größer ist als die Anzahl der Reihen und Spalten der ersten digitalen Darstellung ($F_n$, $F_{n+1}$);
- wobei das genannte Verfahren vor dem Schritt (203) zum Erzeugen des genannten anzeigbaren Bildes (Sn', Sn+1') außerdem einen Schritt (205) zum Sammeln von kontextuellen Betrachtungsdaten (Ix, Mx) beinhaltet, die von dem Bewegungssensor (18) gelieferte Betrachtungsorientierungsdaten umfassen, die eine Orientierung der Mensch-Maschine-Ausgangsschnittstelle (12, 12o) charakterisieren, und zum Bestimmen eines virtuellen Horizonts der genannten Mensch-Maschine-Ausgangsschnittstelle (12, 12o);
- wobei der Schritt (203) zum Erzeugen des genannten anzeigbaren Bildes (Sn', Sn+1') ferner darin besteht, eine Drehung des genannten anzeigbaren Bildes (Sn', Sn+1') relativ zu seinem Zentrum zu implementieren, so dass der virtuelle Horizont des genannten anzeigbaren Bildes (Sn', Sn+1') im Wesentlichen parallel zum virtuellen Horizont der Ausgangsschnittstelle (12, 12o) ist.

**2.** Verfahren (200) nach dem vorherigen Anspruch, wobei das genannte anzeigbare Bild (Sn', Sn+1') die gleichen Abmessungen wie die zweite digitale Darstellung (Sn, Sn+1) hat und durch Einbetten oder Überlagern der ersten digitalen Darstellung (Fn, Fn+1) in die zweite digitale Darstellung (Sn, Sn+1) erzeugt wird, wobei das genannte Einbetten eine wesentliche Überlagerung der jeweiligen Zentren der ersten und zweiten digitalen Darstellung (Fn, Fn+1) und (Sn, Sn+1) vor der genannten Drehung der genannten ersten digitalen Darstellung ($F_n$, $F_{n+1}$) um ihr Zentrum beinhaltet, wobei das genannte anzeigbare Bild (Sn', Sn+1') ferner Abmessungen hat, die größer sind als die Anzeigekapazität der genannten Mensch-Maschinen-Ausgangsschnittstelle (12, 12o) des genannten elektronischen Geräts (10), wobei das Verfahren **dadurch gekennzeichnet ist, dass** nur Pixel, die der ersten digitalen Darstellung (Fn, Fn+1) gemeinsam sind, von der genannten Mensch-Maschinen-Ausgangsschnittstelle (12, 12o) angezeigt werden können.

**3.** Verfahren (200) nach einem der vorherigen Ansprüche, wobei das erste und zweite elektronische Gerät nur eine einzige physische Einheit (10) bilden.

**4.** Computerprogrammprodukt (P) mit von einem Computer (10) lesbaren Programmbefehlen, die bei Ausführung oder Interpretation durch eine Verarbeitungseinheit (11) des genannten Computers (10) die Implementation eines Verfahrens (200) zum Betrachten eines digitalen Bildes nach einem der vorherigen Ansprüche bewirken.

**5.** Elektronisches Gerät (10), das eine
Verarbeitungseinheit (11), einen Datenspeicher (14), einen Programmspeicher (15), eine Mensch-Maschine-Ausgangsschnittstelle (12, 12o) umfasst, **dadurch gekennzeichnet, dass** die Programmbefehle eines Computerprogrammprodukts (P) nach dem vorherigen Anspruch in den Programmspeicher (15) des genannten elektronischen Geräts (10) eingeschrieben sind.

**6.** Elektronisches Gerät (10) nach dem vorherigen Anspruch, wobei der Bewegungssensor (18) aus einer inertialen Messeinheit und/oder einem Magnetometer besteht.

**7.** Elektronisches Gerät (10) nach einem der Ansprüche 4 oder 5, bestehend aus einem Smartphone.

**Claims**

**1.** Method (200) for viewing a digital image resulting from a capture of a scene (SC) by matrix capture means (16) of a first electronic device (10) including a data memory (14) and a motion sensor (18) of said matrix capture means (16), said method (200) being implemented by a processing unit (11) of a second electronic device (10), said second electronic device (10) moreover including a data memory (14), a human-machine output interface (12, 12o) and a motion sensor (18) of the human-machine output interface (12, 12o), said method (200) including:

- a step (201) for reading in the data memory (14) a first digital representation ($F_n$, $F_{n+1}$) of said scene (SC), and a second digital representation ($S_n$, $S_{n+1}$) associated with the first digital representation ($F_n$, $F_{n+1}$) of said scene (Sc) and said first ($F_n$, $F_{n+1}$) and second ($S_n$, $S_{n+1}$) digital representations consisting respectively of two pixel arrays the number of rows and columns of which are predetermined, said first and second digital representations together resulting from the prior capture of said scene (SC) by a processing unit (11) of said first electronic device (10);
- a step (202) for identifying in the second digital representation ($S_n$, $S_{n+1}$) and decoding a graphical content ($GC_n$, $GC_{n+1}$) embedded in said second digital representation and characterizing an orientation of the capture means (16) in relation to the captured scene (SC) during ($t_n$, $t_{n+1}$) a capture thereof (SC) and decoding contextual capture data ($I_n$, $I_{n+1}$, $M_n$, $M_{n+1}$) comprising capture orientation data having been issued during the capture by said motion sensor (18) of said matrix capture means (16) of the first electronic device (10);
- a step (203) for determining a virtual horizon ($HF_n$, $HF_{n+1}$) of the first digital representation ($F_n$, $F_{n+1}$) based on contextual data deduced from the decoding of said graphical content ($GC_n$, $GC_{n+1}$);
- a step (203) for producing an image ($S_n'$, $S_{n+1}'$) that can be displayed by the human-machine output interface (12, 12o), based on said second digital representation ($S_n$, $S_{n+1}$) by superimposing said first digital representation ($F_n$, $F_{n+1}$) after rotation thereof about its centre, such that the virtual horizon ($HF_n$, $HF_{n+1}$) of the first digital representation ($F_n$, $F_{n+1}$) determined beforehand is substantially parallel to a row of pixels of said second digital representation ($S_n$, $S_{n+1}$);
- a step (204) for causing a display of said image that can be displayed ($S_n'$, $S_{n+1}'$) by the human-machine output interface (12, 12o) of the second electronic device (10), the number of rows and columns of the second

digital representation ($S_n$, $S_{n+1}$) being greater than the number of rows and columns of the first digital representation ($F_n$, $F_{n+1}$) ;

- said method moreover including, prior to the step (203) for producing said image that can be displayed (Sn', Sn+1'), a step (205) for collecting contextual viewing data (Ix, Mx), comprising viewing orientation data delivered by the motion sensor (18) characterizing an orientation of the human-machine output interface (12, 12o) and for determining a virtual horizon of said human-machine output interface (12, 12o);

- the step (203) for producing said image that can be displayed (Sn', Sn+1') moreover consisting of implementing a rotation of said image that can be displayed (Sn', Sn+1') with respect to the centre thereof, such that the virtual horizon of said image that can be displayed (Sn', Sn+1') is substantially parallel to the virtual horizon of the output interface (12, 12o).

2. Method (200) according to the preceding claim, for which said image that can be displayed (Sn', Sn+1') has the same dimensions as the second digital representation (Sn, Sn+1) and produced by the embedding or superimposition of the first digital representation (Fn, Fn+1) in the second digital representation (Sn, Sn+1), said embedding comprising an appreciable superimposition of the respective centres of the first and second digital representations (Fn, Fn+1) and (Sn, Sn+1) preceding said rotation of said first digital representation (Fn, Fn+1) about its centre, said image that can be displayed (Sn', Sn+1') moreover having dimensions greater than the display capacity of said human-machine output interface (12, 12o) of said electronic device (10), the method being **characterized in that** only pixels common to the first digital representation (Fn, Fn+1) can be displayed by said human-machine output interface (12, 12o).

3. Method (200) according to one of the preceding claims, for which the first and second electronic devices constitute one and the same physical entity (10) only.

4. Computer program product (P) including program instructions readable by a computer (10) which, when they are executed or interpreted by a processing unit (11) of said computer (10), cause the implementation of a method (200) for viewing a digital image according to any one of the preceding claims.

5. Electronic device (10) including a processing unit (11), a data memory (14), a program memory (15), a human-machine output interface (12, 12o), **characterized in that** the program instructions of a computer program product (P) according to the preceding claim are written in the program memory (15) of said electronic device (10).

6. Electronic device (10) according to the preceding claim, for which the motion sensor (18) consists of an inertial measurement unit and/or of a magnetometer.

7. Electronic device (10) according to any one of claims 4 or 5, consisting of a smartphone.

EP 3 861 713 B1

FIG.1

FIG.2a

FIG.2

16

FIG.3a

GC$_{n+1}$

203

I$_{n+1}$

M$_{n+1}$

203

F$_{n+1}$

HF$_{n+1}$

S$_n$'

203

202

14

201

GC$_{n+1}$

F$_{n+1}$

FIG.3b

FIG.4

FIG.5

FIG.6

FIG.7

FIG.8

FIG.9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2014031830 A1
- US 2011228112 A1, KAHEEL AYMAN
- EP 3123732 A1
- US 2014118256 A1, SONODA NAO